# EUROPEAN PATENT APPLICATION

(11) **EP 1 650 898 A1**
(43) Date of publication of application: **26.04.2006**
(21) Application number: 05300819.9
(22) Date of filing: 14.10.2005
(51) Int. Cl.: H04L 12/24

(54) **Packet switch network link**

(30) Priority: 21.10.2004 US 969021
(71) Applicant: Alcatel, 75008 Paris (FR)
(72) Inventor: Hamdy, Mahmoud Farid, Kanata, Ontario K2M 2M6 (CA); Shah, Dhaval, Nepean, Ontario K2G 6Z5 (CA); Chen, Cary, Kanata, Ontario K2K 2X7 (CA); La Rocque, Gregory Evans, Kinburn, Ontario K0A 2H0 (CA); Hassoun, Houda, Kanata, Ontario K2W 1E7 (CA); Fraiji, Nicolas Emile, Ottawa, Ontario K1N 1E8 (CA)
(74) Representative: Hervouet, Sylvie

(57) **Abstract**

A Packet Switch Network Link (PSNL) serves as an abstraction of a Multi-Protocol Label Switch (MPLS) core in a multi-services networking infrastructure. The networking infrastructure provides end to end connectivity between end networks that may be, for example ATM networks. The PSNL exists in a layer 2 network manager and allows a service provider to transport a customer's call over it as the same manner as it would over a physical link.

## Description

### Field of the invention

This invention relates to packet switched networks, and more particularly to systems and method whereby a service provider can migrate a range of existing services over a consolidated MPLS core.

### Background of the invention

Packet switched networks in general have the potential to reduce the complexity of a service provider's infrastructure by allowing virtually any existing service to be supported over a single networking infrastructure.

Packet switched networks, unlike circuit switched networks, configure data into packets which are switched through shared transmission resources. One of the packet switched mechanisms receiving considerable attention at the present time is multi-protocol label switching (MPLS). MPLS was originally developed to provide faster packet forwarding than traditional IP routing and its flexibility has led to it becoming the default way for modern networks to achieve the quality of service and next generation VPN services.

Traditional IP networks are connectionless: when a packet is received the router determines the next hop using the destination IP address on the packet alongside information from its own forwarding table. The router's forwarding tables contain information on the network topology. They use an IP routing protocol or static configuration to keep their information synchronized with changes in the network. MPLS also uses IP addresses to identify end points and intermediate switches and routers. This makes MPLS networks IP-compatible and easily integrated with traditional IP networks. However, unlike a traditional IP, MPLS flows are connection-oriented and their packets are routed along preconfigured label switched paths (LSPs).

MPLS works by tagging packets with an identifier or a label to distinguish the LSP. When a packet is received, the router reuses this label and sometimes also the link over which it was received to identify the LSP. It then looks up the LSP in its own forwarding table to determine the best link over which to forward the packet, and the label to use on this next hop. A different label is used for each hop and is chosen by the router or switch performing the forwarding operation. This allows the use of very fast and simple forwarding engines as the router can select the label to minimize processing.

Although MPLS core networks represent promise for the future as they dramatically lower the per bit transport cost for carriers while insuring that quality of service capabilities are maintained introduction of this new layer and technology into the network poses new operational challenges. Significant network management capabilities are needed to complement the introduction of MPLS if operational cost reductions are to be achieved and if the full technological benefits of MPLS are to be realized. MPLS enabled network management systems are needed to deliver the operational savings expected from the transition to the new network infrastructure. These management solutions need to provide capabilities to extend the quality of service based end-to-end provisioning and assurance capabilities of frame relay/asynchronous transfer mode (FR/ATM) to the new IP/MPLS fabrics.

Network management systems such as the Alcatel 5620 IP/MPLS data network management architecture is an important tool in broadband management and in particular for multi services networks in which an MPLS core is used to provide end-to-end connection through provider edge routers. The provider edge routers typically implement ATM, frame relay or ethernet technologies, for example.

A pseudo wire is a point-to-point connection between pairs of provider edge routers. Its primary function is to emulate service like ATM or ethernet over an underlying core MPLS network through encapsulation into a common MPLS format. By encapsulating services into common MPLS format a pseudo wire allows carrier to converge their services to an MPLS network.

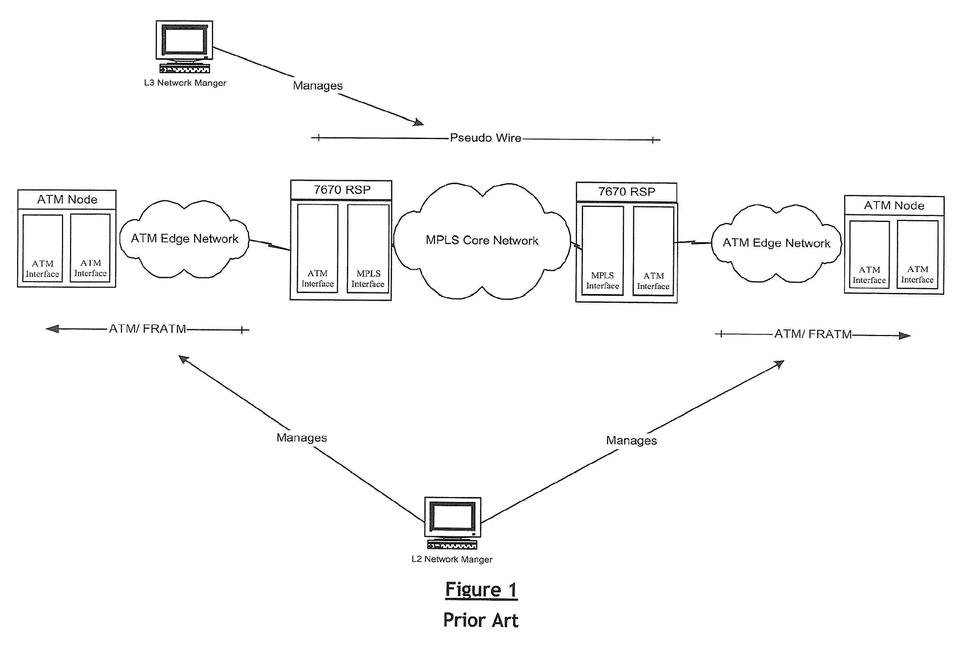

A prior art system such as that described above is illustrated in Figure 1. In this architecture the MPLS core network communicates with routing switch platforms (RSPs) such as Alcatel 7670 RSP. Each 7670 RSP has an MPLS interface to communicate with the MPLS core and an interface to communicate with the edge network which may be an ATM edge network as shown in Figure 1. As shown in Figure 1 a network manager is required at the layer-3 level to manage the pseudo wire from RSP to RSP. Separate layer-2 network managers are required to control the ATM portions of the end-to-end connection. This requires manual management of connections through the network due to the separation between the ATM connections and the MPLS tunnels. Because of this there is a lack of end-to-end management for calls initiated and terminated on the ATM network but crossing the MPLS core using, for example, ATM pseudo wires. Because of this lack of end-to-end management functions such as diagnostics, static connection recovery etc., are more complicated. Additionally migrating calls from core ATM networks to MPLS based core networks represents a difficult process due to the manual involvement and due to the fact that multiple network managers or components are required to complete the migration. Provisioning of calls which ride on the MPLS core network require two different types of technological expertise namely ATM experience to provision the ATM portion and MPLS experience to provision the MPLS portion.

Accordingly, there is a need for a management entity which will overcome these limitations.

### Summary of the invention

The present invention allows a provider to migrate existing ATM networks, for example, over a consolidated MPLS core without undue difficulty.

Therefore, in accordance with a first aspect of the present invention there is provided a networking infrastructure for logically connecting edge devices over a multi-protocol label switching (MPLS) core to migrate multiple network services employing a packet switch network link (PSNL) and a management entity to provide end-to-end management of the edge devices and the PSNL.

In accordance with the second aspect of the invention there is provided a method of managing an end-to-end connection between edge devices for transporting multiple network services over a MPLS core, the method comprising: providing a packet switch network link PSNL between the edge devices, the PSNL emulating physical connectivity; and providing a management entity for managing both the PSNL and the multiple network services.

In accordance with the further aspect of the invention there is provided a system for implementing and managing services between service networks at opposite ends of a network infrastructure having a multi protocol label switching (MPLS) core the system comprising a packet switch network link acting as an abstraction of the MPLS core and hiding layer-3 specific configuration associated with the service network; and a layer-2 network manager to provide end-to-end management across the service network and the MPLS core.

### Brief description of the drawings

The invention will now be described in greater detail with reference to the attached drawings wherein:
FIG. 1 shows the prior art solution for a call or a service to be connected between two different ATM network connected through an MPLS core;
FIG. 2 shows the architecture of Figure 1 but utilizing the PSNL of the present application;
FIG. 3 shows the ability to provide end-to-end path management over MPLS core network for different types of circuits.

### Detailed description of the invention

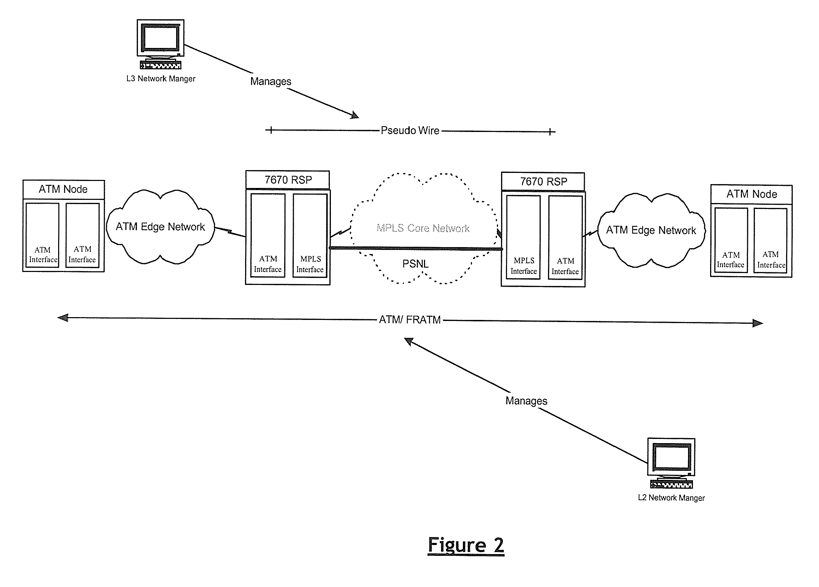

The basic architecture of the present invention is illustrated in Figure 2 wherein a packet switch network link (PSNL) is used in place of the MPLS core. In fact, the PSNL is an abstraction of the MPLS core network in as much as it hides all the required layer-3 specific configuration for an ATM pseudo wire. PSNL exists in a layer-2 network manager, for example ATM management, and accordingly, represents logical connectivity between RSP nodes such as Alcatel 7670 RSPs.

Since the PSNL appears as a basic layer-2 connectivity it allows a customer call to ride over it in the same manner as it would a physical link.

More importantly, however, connections that ride the PSNL have the full end-to-end management that is available to pure ATM calls namely statistics connection, rerouting, optimization, automatic recovery, diagnostic and maintenance operations.

As shown in Figure 2 a single layer-2 network manager controls the ATM/FRATM edge node networks as well as the PSNL operating in place of the MPLS core. The layer-3 network manager manages the pseudo wire as shown in the prior art. Layer-3 network manager (MPLS specific network manager) is not mandatory as Layer-2 will manage the whole network (MPLS segment in addition to ATM/FR segments)

As PSNL acts as a layer-2 connectivity, the ATM Pseudo-Wire endpoint configuration on the MPLS edge [endpoints of the PSNL] will appear as an ATM connection [where VPI/VCI represent the Pseudo Wire Identifier].

Through the use of the present invention convergence/migration of ATM networks to MPLS core networks is achieved. This results in easy migration procedures for calls on networks, such as ATM core networks, to MPLS core networks with minimum effort. Most importantly, no special training is required as the PSNL looks and behaves like any other ATM physical link.

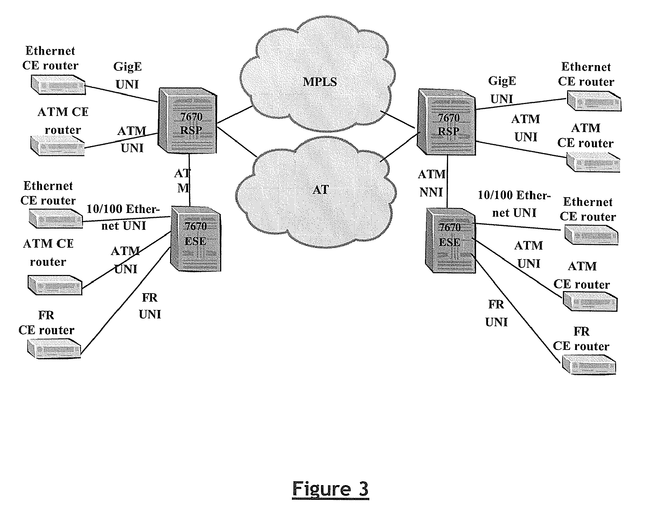

Figure 3 represents some of he different types of legacy traffic and services which may be used with the present invention to provide end-to-end path management over MPLS core networks. These include and ATM; frame relay , and TDM services.

While particular embodiments of the invention have been described and illustrated it will be apparent to one skilled in the art that numerous changes can be made without departing from the basic concepts. It is to be understood, however, that such changes will fall within the full scope of the invention as defined by the appended claims.

## Claims

1. A networking infrastructure for logically connecting edge devices over a multi-protocol label switching (MPLS) core to migrate multiple network services employing a packet switch network link (PSNL) and a management entity to provide end to end management of the edge devices and the PSNL.

2. The networking infrastructure as defined in claim 1 wherein the PSNL acts as a physical representation of MPLS connectivity to migrate the network services across the MPLS core.

3. The networking infrastructure as defined in claim 2 for providing ATM network services over the MPLS core.

4. The networking infrastructure as defined in claim 2 for providing Frame Relay network services over the MPLS core.

5. The networking infrastructure as defined in claim 2 for providing TDM network services over the MPLS core.

6. A method of managing an end to end connection between edge devices for transporting multiple network services over a MPLS core the method comprising:
providing a packet switch network link (PSNL) between the edge devices, the PSNL emulating physical connectivity; and
providing a management entity for managing both the PSNL and the multiple network services.

7. The method as defined by claim 6 wherein the network service is provided by an ATM network and the PSNL emulates a physical connectivity

8. The method as defined by claim 6 wherein an ATM pseudo-wire configuration represented as ATM connection.

9. The method as defined in claim 6 wherein the management entity collects statistic information.

10. The method as defined in claim 6 wherein the management entity collects diagnostic and maintenance information.

11. The method as defined in claim 6 wherein the management entity provides automatic recovery functionality.

12. The method as defined in claim 6 wherein the management entity provides rerouting and service optimization to the end to end connection.

13. A system for implementing and managing services between service networks at opposite ends of a networking infrastructure having a multi-protocol label switching (MPLS) core, the system comprising:
a packet switch network link acting as a abstraction of the MPLS core and hiding layer-3-specific configuration associated with the service networks; and
a layer 2 network manager to provide end to end management across the service networks and MPLS core.

14. The system as defined in claim 13 wherein the service networks have Routing Switch Platforms (RSPs) at the edge of the MPLS core.

15. The system as defined in claim 13 wherein the service networks are ATM networks.

16. The system as defined in claim 13 wherein the service networks are Frame Relay networks.
